# EUROPEAN PATENT APPLICATION

(11) **EP 1 874 037 A2**
(43) Date of publication of application: **02.01.2008**
(21) Application number: 07101049.0
(22) Date of filing: 23.01.2007
(51) Int. Cl.: H04N 5/08

(54) **Optical scanning unit and method thereof**

(30) Priority: 28.06.2006 KR 20060058885
(71) Applicant: Samsung Electronics Co., Ltd., Suwon-si, Gyeonggi-Do 442-742 (KR)
(72) Inventor: Kim, Se-tae, Seoul (KR)
(74) Representative: Waddington, Richard

(57) **Abstract**

An optical scanning device and method of optical scanning are provided. The optical scanning unit includes a resonant mirror controller (220) scanning light emitted from a laser diode on a photoconductive drum, a first light-receiving sensor (200) which receives the light scanned by the resonant mirror controller (220), and outputs a first horizontal synchronization signal which determines a start position of optical scanning according to the received light, and a video signal controller (240), responding to the first horizontal synchronization signal output from the first light-receiving sensor (200), controls the laser diode so that light corresponding to a video signal is emitted. In the optical scanning unit, a video signal controller (240) can receive a plurality of horizontal synchronization signals (SOS; Start of Scan) through only one input pin irrespective of the number of light-receiving sensors which generate horizontal synchronization signals (SOS; Start Of Scan), which correspond to a start position of optical scanning.

## Description

The present invention relates to an image forming device such as a printer, a multifunctional embedded application platform, among others. More particularly, the present invention relates to an optical scanning device which scans light on a photoconductive drum for forming an image.

Optical scanning devices that use resonant mirrors typically include a laser diode emitting light, a collimating lens, a cylindrical lens, a resonant mirror, an arc sine lens, and two light-receiving sensors.

Light emitted from the laser diode is reflected along scanning lines of a photoconductive drum by a resonating resonant scanning mirror. Since the resonant mirror is resonated and not rotated, light is scanned in two directions. The two light-receiving sensors, which are formed outside of an active scanning area, measure a scanning time of every reciprocating line, and generate a horizontal synchronization signal (SOS: Start Of Scan).

Conventionally, two light-receiving sensors are required to stably control the resonant mirror. That is, two light-receiving sensors measure scanning times. Each horizontal synchronization signal, which is based on a measured scanning time, is used as a return signal which is used for controlling a driving signal of the horizontal synchronization signal. Accordingly, at least two light-receiving sensors are required for optical scanning. The video signal controller should include at least two input terminals for receiving the respective horizontal synchronization signals output from the light-receiving sensors. However, including a plurality of input terminals for receiving the horizontal synchronization signals in the video signal controller makes it complicated to manufacture the video signal controller.

Accordingly, there is a need for an improved system and method for simplifying an optical scanning unit so that a video signal controller can receive a plurality of horizontal synchronization signals through only one input pin regardless of the number of sensors which generate signals corresponding to a start position of optical scanning.

An object of exemplary embodiments of the present invention is to address at least the above problems and/or disadvantages and to provide at least the advantages described below.

The present invention provides an optical scanning unit in which a video signal controller can receive a plurality of horizontal synchronization signals through one input pin irrespective of the number of light-receiving sensors which generate horizontal synchronization signals corresponding to a start position of optical scanning.

According to the present invention there is provided an apparatus and method as set forth in the appended claims. Preferred features of the invention will be apparent from the dependent claims, and the description which follows.

According to an aspect of an exemplary embodiment of the present invention, an optical scanning unit is provided.

The optical scanning unit includes a resonant mirror controller, a first light-receiving sensor and a video signal controller. The resonant mirror controller is operable to control the scanning of light emitted from a laser diode on a photoconductive drum. The first light-receiving sensor is adapted to receive the light scanned by the resonant mirror controller, and to output a first horizontal synchronization signal which determines a start position of optical scanning according to the received light. The video signal controller is operable to respond to the first horizontal synchronization signal output from the first light-receiving sensor and to control the laser diode so that light corresponding to a video signal is emitted.

The optical scanning unit may further include a second light-receiving sensor and a signal composer. The second light-receiving sensor is adapted to receive light scanned by the resonant mirror controller, and to output a second horizontal synchronization signal which determines a start position of optical scanning according to the received light. The signal composer is preferably operable to mix the first horizontal synchronization signal out from the first light-receiving sensor and the second horizontal synchronization signal output from the second light-receiving sensor, wherein the video signal controller, responding to a composed horizontal synchronization signal, which is obtained by the mixing of the signal composer, and to control the laser diode so that light corresponding to the video signal is output.

Other objects, advantages and salient features of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 is a block diagram illustrating an optical scanning unit according to an exemplary embodiment of the present invention;
FIG. 2 is a view illustrating a predetermined time interval, according to an exemplary embodiment of the present invention;
FIGS. 3A and 3B are views for illustrating cases in which light corresponding to video signals is emitted in synchronization with first horizontal synchronization signals;
FIG. 4 is a block diagram illustrating an optical scanning unit according to another exemplary embodiment of the present invention;
FIGS. 5A and 5B are circuit diagrams illustrating the signal composer 230 of FIG. 4, according to exemplary embodiments of the present invention;
FIGS. 6A and 6B are circuit diagrams illustrating elements which are used for generating identifying signals, according to exemplary embodiments of the present invention;
FIG. 7 is a view illustrating a case in which light corresponding to a video signal is emitted in synchronization with the horizontal synchronization signal; and
FIG. 8 is a block diagram illustrating an optical scanning unit according to another exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

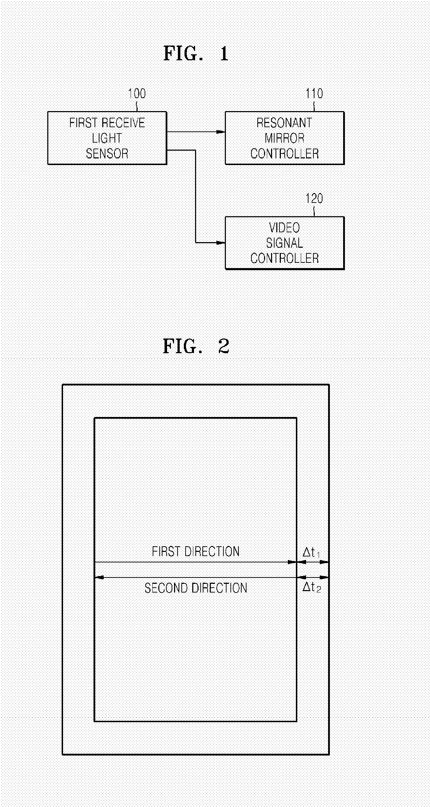

FIG. 1 is a block diagram illustrating an optical scanning unit according to an exemplary embodiment of the present invention. The optical scanning unit includes a first light-receiving (or receive light) sensor 100, a resonant mirror controller 110 and a video signal controller 120.

The first light-receiving sensor 100 receives light which is scanned by the resonant mirror controller 110. According to the received light, the first light-receiving sensor 100 outputs a first horizontal synchronization signal by which a start position of optical scanning can be determined, to the resonant mirror controller 110 and the video signal controller 120. The first light-receiving sensor 100 includes a photo diode.

The resonant mirror controller 110 scans light emitted from a laser diode (not shown) on a photoconductive drum (not shown). The resonant mirror controller 110, responding to the first horizontal synchronization signal provided by the first light-receiving sensor 100, resonates a resonant mirror (not shown) so that the light emitted from the laser diode is scanned on the photoconductive drum. The resonant mirror is resonated. The light corresponding to a video signal is scanned on the photoconductive drum.

The video signal controller 120, responding to the first horizontal synchronization signal received from the first light-receiving sensor 100, controls the laser diode so that light corresponding to the video signal is emitted. According to an exemplary implementation, the video signal controller 120 receives the first horizontal synchronization signal output from the first light-receiving sensor 100 through one input port.

When light is scanned in two directions, the video signal controller 120 may control the laser diode so that light is scanned in a first direction, and light is scanned in a second direction, which is opposite to the first direction after a predetermined time interval is passed. According to an exemplary implementation, the predetermined time interval is a sum of a time corresponding to a margin of a printing paper after completing the optical scanning in the first direction and a time corresponding to a margin of a printing paper before starting the optical scanning in the second direction. FIG. 2 is a view for illustrating the predetermined time interval, according to an exemplary embodiment of the present invention. Referring to FIG. 2, Δt1 is a time corresponding to a margin of a printing paper after the optical scanning in the first direction is completed. Δt2 is a time corresponding to a margin of a printing paper before starting the optical scanning in the second direction. Accordingly, the sum of Δt1 and Δt2 is the predetermined time interval.

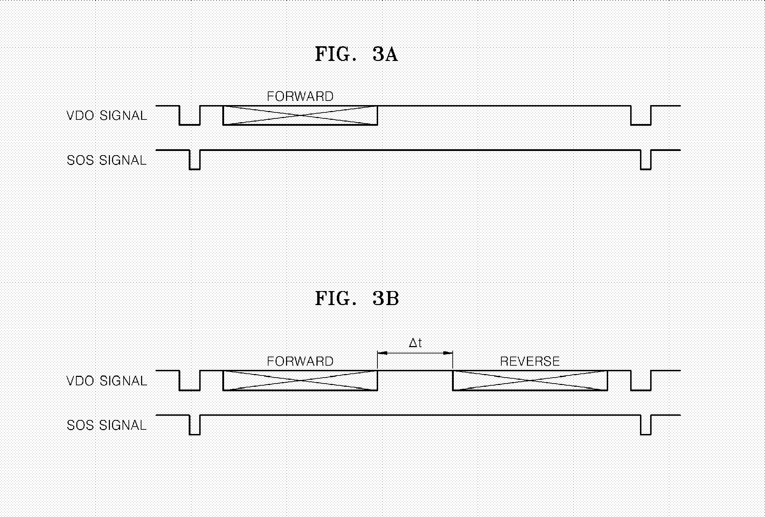

FIGS. 3A and 3B illustrate cases in which light corresponding to video signals is emitted in synchronization with first horizontal synchronization signals. In particular, FIG. 3A is a view illustrating a case in which light corresponding to the video signal (VDO) is scanned in one way only in synchronization with the first horizontal synchronization signal (SOS). Referring to FIG. 3A, when the light is scanned in one way, only one light-receiving sensor is needed to control optical scanning. FIG. 3B is a view illustrating a case in which light corresponding to the video signal (VDO) is scanned in a return direction, that is, two directions in synchronization with the first horizontal synchronization signal (SOS). Referring to FIG. 3B, the light corresponding to the video signal(VDO) is scanned in a forward direction, and then after a predetermined time interval Δt, the light corresponding to the video signal (VDO) is scanned in a reverse direction. Here, the predetermined time interval is a sum of a time corresponding to a margin of a printing paper after completing the optical scanning in the first direction and a time corresponding to a margin of a printing paper before starting the optical scanning in the second direction.

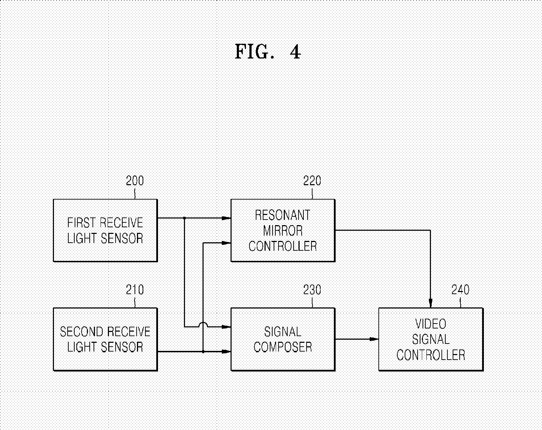

FIG. 4 is a block diagram illustrating an optical scanning unit according to another exemplary embodiment of the present invention. The optical scanning unit includes a first light-receiving (or receive light) sensor 200, a second light-receiving (or receive light) sensor 210, a resonant mirror controller 220, a signal composer 230 and a video signal controller 240.

The first light-receiving sensor 200 receives light which is scanned by the resonant mirror controller 220. According to the received light, the first light-receiving sensor 200 outputs a first horizontal synchronization signal, from which a start position of optical scanning can be determined, to the resonant mirror controller 220 and the signal composer 230. The first light-receiving sensor 200 includes a photo diode.

The second light-receiving sensor 210 receives light which is scanned by the resonant mirror controller 220. According to the received light, the second light-receiving sensor 210 outputs a second horizontal synchronization signal, from which a start position of optical scanning can be determined, to the resonant mirror controller 220 and the signal composer 230. The second light-receiving sensor 210 includes a photo diode.

The resonant mirror controller 220 scans light emitted from a laser diode on a photoconductive drum (not shown). The resonant mirror controller 220, responding to the first horizontal synchronization signal provided by the first light-receiving sensor 200, resonates a resonant mirror (not shown) so that light emitted from the laser diode may be scanned on the photoconductive drum. The resonant mirror is resonated. The light scanned on the photoconductive drum corresponds to a video signal.

The signal composer 230 mixes the first horizontal synchronization signal output from the first light-receiving sensor 200 and the second horizontal synchronization signal output from the second light-receiving sensor 210, and outputs the composed horizontal synchronization signal obtained by the signal composer 230 to the video signal controller 240.

The signal composer 230 receives the first horizontal synchronization signal and the second horizontal synchronization signal through the base terminals of two transistors, respectively. The signal composer 230 then mixes the first horizontal synchronization signal and the second horizontal synchronization signal. The signal composer 230 also receives the first horizontal synchronization signal and the second horizontal synchronization signal through an OR logic gate, and mixes the first horizontal synchronization signal and the second horizontal synchronization signal.

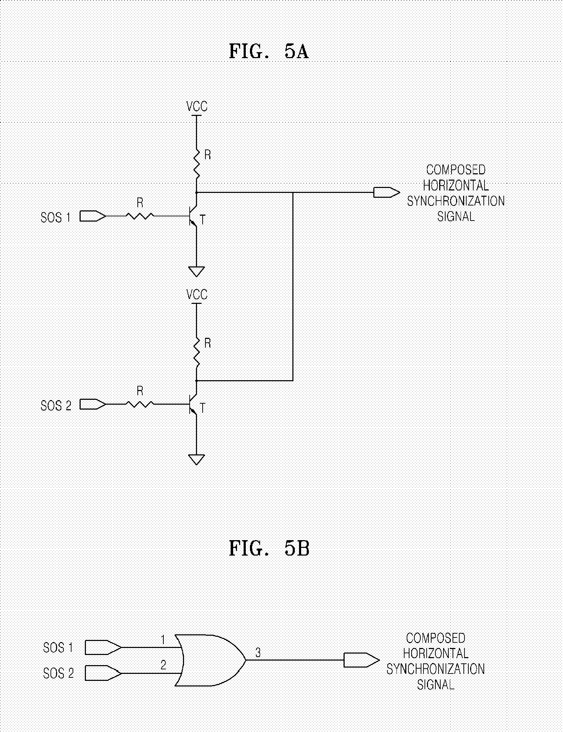

FIGS. 5A and 5B are circuit diagrams illustrating the signal composer 230 of FIG. 4, according to exemplary embodiments of the present invention. In particular, FIG. 5A illustrates a signal composer including two NPN transistors, according to an exemplary embodiment of the present invention. The collectors of the two NPN transistors are connected each other. The first horizontal synchronization signal (SOS1) and the second horizontal synchronization signal (SOS2) are input to the base terminals of the two NPN transistors, respectively. Then, the input signals are mixed and output through the two collectors that are connected to each other. FIG. 5B illustrates a signal composer constituting an OR logic gate, according to another exemplary embodiment of the present invention. A first horizontal synchronization signal (SOS1) and a second horizontal synchronization signal (SOS2) are input to input terminals of the OR logic gate, and output the signal, which is composed already, in an output terminal.

Meanwhile, the resonant mirror controller 220 generates identifying signals which are used to identify whether a horizontal synchronization signal composed by the signal composer 230 is the first horizontal synchronization signal or the second horizontal synchronization signal, and outputs the generated identifying signals to the video signal controller 240. The resonant mirror controller 220 generates the identifying signals using one of a SR Flip-Flop or a JK Flip-Flop. The resonant mirror controller 220 generates the identifying signals using an OR logic gate and a T Flip-Flop.

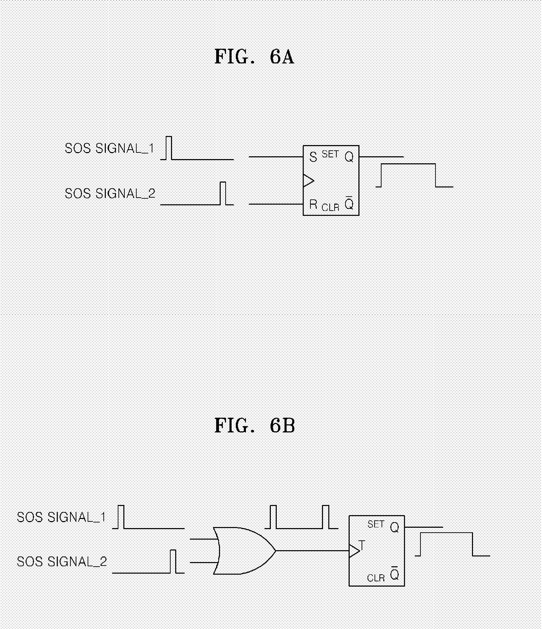

FIGS. 6A and 6B are circuit diagrams illustrating elements which are used for generating identifying signals, according to exemplary embodiments of the present invention. FIG. 6A illustrates a SR Flip-Flop which is used for generating identifying signals, according to an exemplary embodiment of the present invention. Referring to FIG. 6A, a first horizontal synchronization signal (SOS1) and a second horizontal synchronization signal (SOS2) are input to the input terminals of a SR Flip-Flop, respectively. A low or high identifying signal is output based on each input signal from an output terminal of the SR Flip-Flop. FIG. 6B illustrates an OR logic gate and a T Flip-Flop which are used to generate identifying signals. Referring to FIG. 6B, a first horizontal synchronization signal (SOS1) and a second horizontal synchronization signal (SOS2) are input to input terminals of an OR logic gate, respectively. Results based on each input signal are input to an input terminal of the T Flip-Flop. A low or high identifying signal is output based on each input signal from an output terminal of the T Flip-Flop.

The video signal controller 240, responding to a composed horizontal synchronization signal obtained by mixing, which is output from the signal composer 230, controls the laser diode (not shown) so that light corresponding to the video signal may be emitted. According to an exemplary implementation, the video signal controller 240 receives the composed horizontal synchronization signal output from the signal composer 230 through one input port. Meanwhile, the video signal controller 240 receives an identifying signal from the resonant mirror controller 220. The identifying signal is used for identifying whether the composed horizontal synchronization signal obtained by mixing is the first horizontal synchronization signal or the second horizontal synchronization signal.

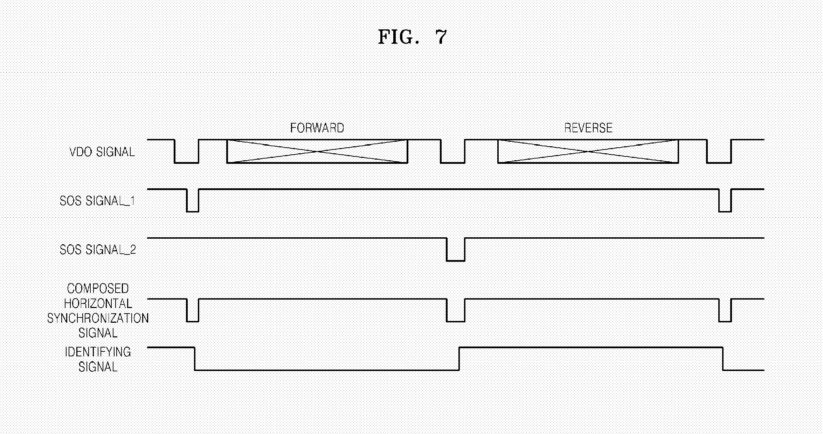

The video signal controller 240 receives the composed horizontal synchronization signal obtained by mixing through one input terminal, and simultaneously receives an identifying signal for identifying the composed horizontal synchronization signal. Accordingly, the light can be scanned in two directions based on the identification of whether the composed horizontal synchronization signal obtained by mixing is the first horizontal synchronization signal or the second horizontal synchronization signal. FIG. 7 is a view illustrating a case in which light corresponding to a video signal is emitted in synchronization with the horizontal synchronization signal. Referring to FIG. 7, a first horizontal synchronization signal (SOS 1) and a second horizontal synchronization signal (SOS 2) are mixed to form a horizontal synchronization signal. An identifying signal is used for identifying the composed horizontal synchronization signal obtained by the mixing.

The video signal controller 240 identifies the composed horizontal synchronization signal output from the signal composer 230 based on the identifying signal. When the identified signal is the first horizontal synchronization signal (SOS1), the video signal controller 240 controls the laser diode so that light of a video signal (VDO) corresponding to a first direction (forward) may be emitted. The video signal controller 240 identifies the mixed horizontal synchronization signal output from the signal composer 230 based on the identifying signal. When the identified signal is the second horizontal synchronization signal (SOS 2), the video signal controller 240 controls the laser diode so that light of a video signal (VDO) corresponding to a second direction (reverse) may be emitted.

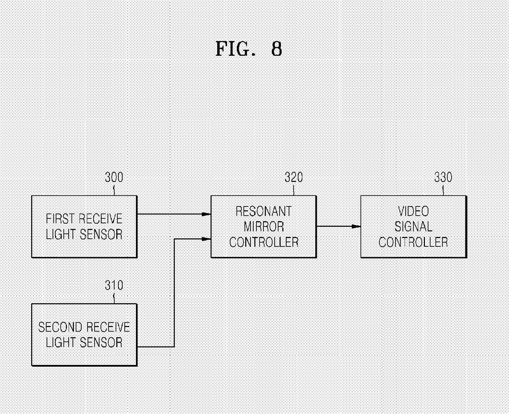

FIG. 8 is a block diagram illustrating an optical scanning unit according to another exemplary embodiment of the present invention. The optical scanning unit includes a first light-receiving sensor 300, a second light-receiving sensor 310, a resonant mirror controller 320 and a video signal controller 330.

The first light-receiving sensor 300 receives light which is scanned by the resonant mirror controller 320, and according to the received light, outputs a first horizontal synchronization signal, from which a start position of optical scanning can be determined, to the resonant mirror controller 320. The first light-receiving sensor 300 includes a photo diode.

The second light-receiving sensor 310 receives light which is scanned by the resonant mirror controller 320, and according to the received light, outputs a second horizontal synchronization signal, from which a start position of optical scanning can be determined, to the resonant mirror controller 320. The second light-receiving sensor 310 includes a photo diode.

The resonant mirror controller 320 scans light emitted from a laser diode (not shown) on a photoconductive drum (not shown). The resonant mirror controller 320, responding to the first horizontal synchronization signal provided by the first light-receiving sensor 300, resonates a resonant mirror (not shown) so that the light emitted from the laser diode may be scanned on the photoconductive drum. The resonant mirror is resonated. The light scanned on the photoconductive drum corresponds to the light emitted from the laser diode.

Meanwhile, the resonant mirror controller 320 mixes the first horizontal synchronization signal output from the first light-receiving sensor 300 and the second horizontal synchronization signal output from the second light-receiving sensor 310. The resonant mirror controller 320 then outputs a composed horizontal synchronization signal obtained by the mixing to the video signal controller 330.

The resonant mirror controller 320 receives the first horizontal synchronization signal and the second horizontal synchronization signal through base terminals of two transistors respectively. The resonant mirror controller 320 then mixes the first horizontal synchronization signal and the second horizontal synchronization signal. The resonant mirror controller 320 receives the first horizontal synchronization signal and the second horizontal synchronization signal through an OR logic gate, and mixes the first horizontal synchronization signal and the second horizontal synchronization signal.

Meanwhile, the resonant mirror controller 320 generates an identifying signal for identifying the composed horizontal synchronization signal obtained by the mixing, and outputs the identifying signals to the video signal controller 330. The resonant mirror controller 320 generates the identifying signals using a SR Flip-Flop or a JK Flip-Flop. The resonant mirror controller 320 generates the identifying signals using the OR logic gate and a T Flip-Flop.

The video signal controller 330 controls the laser diode so that light corresponding to the video signal may be emitted. The laser diode is controlled in response to the composed horizontal synchronization signal and the identifying signal provided from the resonant mirror controller 320.

The video signal controller 330 receives the composed horizontal synchronization signal through one input terminal, and simultaneously receives the identifying signals for identifying the composed horizontal synchronization signal. Accordingly, the light can be scanned in two directions based on identifying whether the composed horizontal synchronization signal is the first horizontal synchronization signal or the second horizontal synchronization signal.

The optical scanning unit may be used in an image forming device such as a printer, and a multifunctional embedded application platform, among others.

In the optical scanning unit, according to an exemplary embodiment of the present invention, a video signal controller can receive a plurality of horizontal synchronization signals (SOS; Start of Scan) by only one input pin irrespective of the number of received light sensors which generate horizontal synchronization signals (SOS; Start Of Scan) corresponding to a start position of optical scanning when light is scanned using a micro resonant scanning mirror (SOS; Start Of Scan).

Accordingly, the video signal controller does not need to have a plurality pins, and thus manufacturing costs decrease.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical scanning unit comprising:
a resonant mirror controller (110/220) for controlling the scanning of light emitted from a laser diode on a photoconductive drum;
a first light-receiving sensor (100/200) for receiving the light scanned by the resonant mirror controller (110/220), and for outputting a first horizontal synchronization signal which determines a start position of optical scanning according to received light; and
a video signal controller (120/240) for controlling the laser diode so that light corresponding to a video signal is emitted, wherein the video signal controller (120/240) is operable to respond to the first horizontal synchronization signal output from the first light-receiving sensor (100/200).

2. The optical scanning unit of claim 1, wherein the video signal controller (120/240) is operable to receive the first horizontal synchronization signal output from the first light-receiving sensor (100/200) through one input port.

3. The optical scanning unit of claim 1 or claim 2, wherein when light is scanned in two directions, the video signal controller (120/240) is operable to control the laser diode so that light is scanned in a first direction and then light is scanned in a second direction which is opposite to the first direction after a time interval is passed.

4. The optical scanning unit of claim 3, wherein the time interval comprises a sum of a time corresponding to a margin of a printing paper after completing the optical scanning in the first direction and a time corresponding to a margin of a printing paper before starting the optical scanning in the second direction.

5. The optical scanning unit of any preceding claim, further comprising:
a second light-receiving sensor (210) for receiving light scanned by the resonant mirror controller (110/220), and for outputting a second horizontal synchronization signal which determines a start position of optical scanning according to the received light; and
a signal composer (230) for mixing the first horizontal synchronization signal out from the first light-receiving sensor (100/200) and the second horizontal synchronization signal output from the second light-receiving sensor (210),
wherein the video signal controller (120/240), responding to a composed horizontal synchronization signal which is obtained by the mixing of the signal composer (230), is operable to control the laser diode so that light corresponding to the video signal is output.

6. The optical scanning unit of claim 5, wherein the signal composer (230) is operable to receive the first horizontal synchronization signal and the second horizontal synchronization signal through base terminals of two transistors, respectively, and to mix the first horizontal synchronization signal and the second horizontal synchronization signal.

7. The optical scanning unit of claim 5, wherein the signal composer (230) is operable to receive the first horizontal synchronization signal and the second horizontal synchronization signal through an OR logic gate, and to mix the first horizontal synchronization signal and the second horizontal synchronization signal.

8. The optical scanning unit of claim 5, wherein the video signal controller (120/240) is operable to receive the composed horizontal synchronization signal through one input port.

9. The optical scanning unit of claim 8, wherein the resonant mirror controller (110/220) is operable to generate an identifying signal for identifying whether the composed horizontal synchronization signal comprises at least one of the first horizontal synchronization signal and the second horizontal synchronization signal, and to output the identifying signal to the video signal controller (120/240).

10. The optical scanning unit of claim 9, wherein the resonant mirror controller (110/220) is operable to generate the identifying signal using one of an SR Flip-Flop and a JK Flip-Flop.

11. The optical scanning unit of claim 9, wherein the resonant mirror controller (110/220) is operable to generate the identifying signal using the OR logic gate and a T Flip-Flop.

12. The optical scanning unit of any preceding claim, further comprising:
a second light-receiving sensor (210) for receiving light scanned by the resonant mirror controller (220), and for outputting a second horizontal synchronization signal which determines a start position of optical scanning according to the received light,
wherein the resonant mirror controller (220) is operable to mix the first horizontal synchronization signal output from the first light-receiving sensor (200) and the second horizontal synchronization signal output from the second light-receiving sensor (210), and the video signal controller (240), responding to a horizontal synchronization signal composed by the resonant mirror controller (220), is operable to control the laser diode so that light corresponding to the video signal is output.

13. The optical scanning unit of claim 12, wherein the resonant mirror controller (220) is operable to receive the first horizontal synchronization signal and the second horizontal synchronization signal through base terminals of two transistors, respectively, and to mix the first horizontal synchronization signal and the second horizontal synchronization signal.

14. The optical scanning unit of claim 12 or claim 13, wherein the resonant mirror controller (220) is operable to receive the first horizontal synchronization signal and the second horizontal synchronization signal through the OR logic gate, and to mix the first horizontal synchronization signal and the second horizontal synchronization signal.

15. The optical scanning unit of any one of claims 12 to 14, wherein the resonant mirror controller (220) is operable to generate an identifying signal for identifying whether the composed horizontal synchronization signal comprises at least one of the first horizontal synchronization signal and the second horizontal synchronization signal, and to output the identifying signal to the video signal controller (240).

16. The optical scanning unit of claim 15, wherein the resonant mirror controller (220) generates the identifying signal using one of a SR Flip-Flop and a JK Flip-Flop.

17. The optical scanning unit of claim 15, wherein the resonant mirror controller (220) is operable to generate the identifying signal using an OR logic gate and a T Flip-Flop.

18. An image forming device comprising the optical scanning unit of any one of claims 1 to 17.

19. An optical scanning method comprising:
controlling the scanning of light emitted from a laser diode on a photoconductive drum;
receiving the light scanned by a resonant mirror controller (220), and outputting a first horizontal synchronization signal which determines a start position of optical scanning according to received light; and
controlling the laser diode so that light corresponding to a video signal is emitted, wherein the video signal controller (240) responds to the first horizontal synchronization signal output from the first light-receiving sensor (200).
